# FASCICULE DE BREVET EUROPEEN

(11) **EP 1 556 260 B1**
(45) Date de publication et mention de la délivrance du brevet: **27.02.2008**
(21) Numéro de dépôt: 03809304.3
(22) Date de dépôt: 22.10.2003
(51) Int. Cl.: B60S 1/04, B60S 1/34

(54) **AGENCEMENT DE SECURITE PERMETTANT UNE SEPARATION EN DEUX ELEMENTS DE LA TETE D'ENTRAINEMENT D'UN BRAS D'ESSUIE-GLACE**
SICHERHEITSANORDNUNG ZUM TRENNEN DES ANTRIEBSKOPFS EINESWISCHERARMS IN ZWEI ELEMENTE
SAFETY ARRANGEMENT FOR SEPARATING INTO TWO ELEMENTS THE DRIVING HEAD OF A WIPER ARM

(30) Priorité: 28.10.2002 FR 0213485
(43) Date de publication de la demande: 27.07.2005
(73) Titulaire: VALEO SYSTEMES D'ESSUYAGE, 78321 La Verrière (FR)
(72) Inventeur: EUSTACHE, Jean-Pierre, F-92160 Antony (FR)
(86) Numéro de dépôt international: PCT/EP2003/011696
(87) Numéro de publication internationale: WO 2004/037621

(56) Documents cités:
- DE-A- 19 833 488
- PATENT ABSTRACTS OF JAPAN vol. 2000, no. 05, 14 septembre 2000 (2000-09-14) & JP 2000 062575 A (ASMO CO LTD;HONDA MOTOR CO LTD), 29 février 2000 (2000-02-29)

## Description

L'invention concerne un agencement pour la fixation d'un dispositif d'essuyage pour véhicule automobile.

L'invention concerne plus particulièrement un agencement pour la fixation d'un dispositif d'essuyage pour véhicule automobile, du type comportant :
- un palier de guidage en rotation et de fixation d'un arbre d'entraînement en balayage alterné d'un bras d'essuyage, qui s'étend axialement suivant une direction sensiblement verticale, et qui est fixé sur un élément de structure de caisse du véhicule par des moyens qui permettent sa désolidarisation au moins partielle d'avec l'élément de structure de caisse lorsque le dispositif d'essuyage est soumis à un impact ; et
- une tête d'entraînement qui relie le bras d'essuyage à l'arbre d'entraînement et qui comporte un élément avant portant le bras d'essuyage, et un élément arrière qui consiste en une douille coaxiale à l'arbre d'entraînement et qui est reçu au moins en partie dans un logement complémentaire de l'élément avant, l'élément avant et "élément arrière étant reliés entre eux par des moyens permettant une désolidarisation du bras d'essuyage d'avec l'arbre d'entraînement lors de la désolidarisation du palier d'avec l'élément de structure de caisse.

En cas de collision du véhicule avec un piéton, la partie du mécanisme d'essuie-glace qui fait globalement saillie à l'extérieur du véhicule constitue un objet contondant qui risque de provoquer des blessures.

On a aussi remarqué que, en cas d'accident violent, le dispositif d'essuyage, qui est agencé dans le compartiment moteur à proximité de l'habitacle, pouvait pénétrer à l'intérieur de l'habitacle par la baie de pare-brise sous l'effet du choc.

L'intrusion accidentelle d'un élément aussi massif se révèle alors dangereuse pour la sécurité des passagers et il est donc apparu nécessaire de mieux prévoir le comportement du dispositif d'essuyage en cas de choc violent.

On connaît l'existence de moyens permettant un effacement du palier, notamment dans le document FR-A-2.733.474 qui décrit un palier de fixation qui comporte des zones d'amorce à la rupture, et dans le document WO-A-99.38736 qui décrit des moyens permettant à l'arbre d'entraînement de coulisser axialement dans le fût en cas d'impact, voir également DE 198 334 88.

Cependant, après l'effacement du palier, le bras et le balai d'essuyage s'étendent encore à l'extérieur du véhicule de sorte qu'ils gênent l'effacement total du palier, et qu'ils constituent eux-mêmes des objets contondants susceptibles de provoquer des blessures.

L'invention a pour but de proposer un agencement permettant d'éviter que le bras et le balai ne constituent des éléments pouvant provoquer des blessures graves pour une victime.

Dans ce but, l'invention propose un agencement pour la fixation un dispositif d'essuyage pour véhicule automobile du type décrit précédemment, caractérisé en ce que les moyens de liaison de l'élément avant avec l'élément arrière comportent au moins une pièce intermédiaire qui est apte à se désolidariser de l'élément avant, ou de l'élément arrière, lors de la désolidarisation du palier d'avec l'élément de structure de caisse.

Selon d'autres caractéristiques de l'invention :
- la pièce intermédiaire comporte une zone d'amorce de rupture ;
- la pièce intermédiaire est apte à se déformer élastiquement ou plastiquement lors de la désolidarisation du fût d'avec l'élément de structure de caisse ;
- l'élément avant et/ou l'élément arrière comporte au moins un doigt qui est reçu dans un orifice complémentaire de la pièce intermédiaire, et la désolidarisation du fût d'avec l'élément de structure de caisse provoque la sortie du doigt hors de l'orifice ;
- l'élément avant et/ou l'élément arrière comporte au moins un doigt qui est reçu dans un orifice complémentaire de la pièce intermédiaire qui est apte à se déformer plastiquement ou élastiquement pour sortir hors de l'orifice de la pièce intermédiaire lors de la désolidarisation du fût d'avec l'élément de structure de caisse ;
- l'élément avant et/ou l'élément arrière comporte au moins un doigt qui est reçu dans un orifice complémentaire de la pièce intermédiaire qui est apte à se rompre lors de la désolidarisation du fût d'avec l'élément de structure de caisse ;
- le fût est un composant d'un palier de guidage qui comporte une semelle annulaire et coaxiale au fût, de fixation sur un élément de structure de caisse, et en ce que le fût est relié à la semelle par l'intermédiaire d'au moins un élément de la semelle qui est reçu dans une gorge complémentaire de la paroi cylindrique externe du fût et qui est apte à échapper hors de la gorge par déformation élastique ou par rupture, lors de la désolidarisation du palier d'avec l'élément de structure de caisse.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée du mécanisme d'essuyage conforme à l'invention ;
- la figure 2 est une section suivant un plan vertical passant par l'axe A du mécanisme d'essuyage, représenté en conditions d'utilisation normales ;
- la figure 3 est une section similaire à celle de la figure 2, dans laquelle le mécanisme d'essuyage est représenté après un impact ; et
- la figure 4 est une vue en perspective d'un mécanisme d'essuyage conforme à une variante de réalisation de l'invention.

Pour la description de l'invention, on adoptera à titre non limitatif les orientations verticale, longitudinale et transversale selon le repère V, L, T indiqué aux figures.

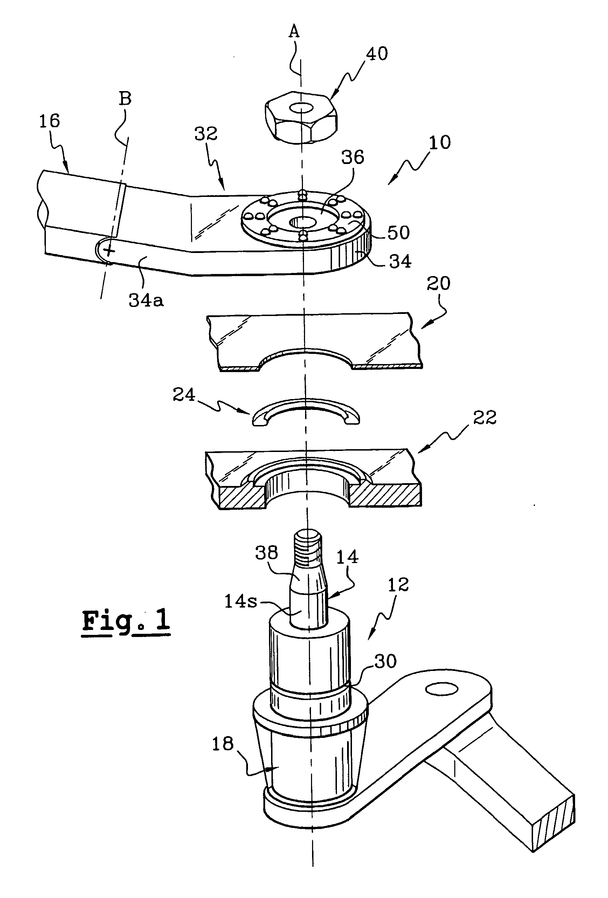

On adoptera aussi la direction d'arrière en avant comme étant la direction longitudinale et de gauche à droite en se reportant à la figure 1.

Dans la description qui va suivre, des éléments identiques, similaires ou analogues seront désignés par les mêmes chiffres de référence.

On a représenté à la figure 1, un dispositif d'essuyage 10 d'une vitre d'un véhicule automobile qui comporte un palier 12 et un arbre d'entraînement 14 d'un bras d'essuie-glace 16.

Le palier 12 permet le guidage en rotation et la fixation de l'arbre d'entraînement 14. Il comporte un fût 18 tubulaire d'axe A vertical qui est prévu pour recevoir l'arbre d'entraînement 14, à rotation autour de son axe A.

Pour sa fixation sur un élément de structure de caisse 20 du véhicule, le palier 12 comporte une semelle 22 globalement annulaire et coaxiale au fût 18.

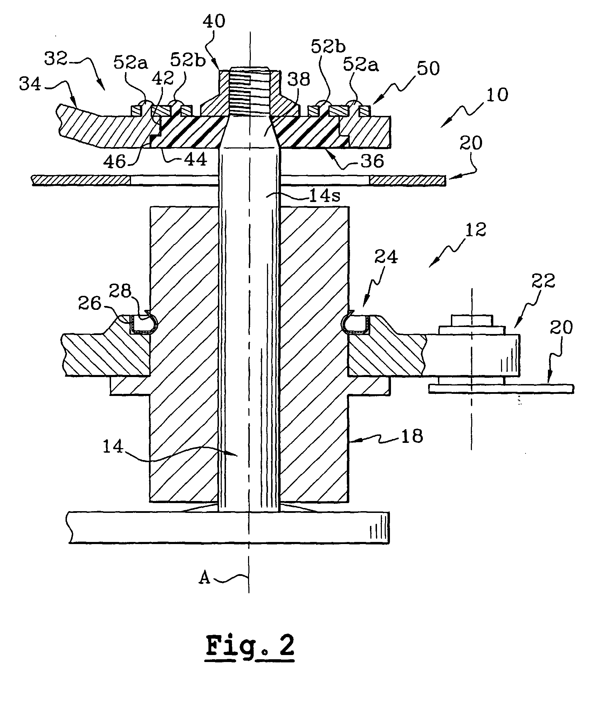

Selon une conception connue, il est prévu des moyens de fixation du palier 12 avec l'élément de structure de caisse 20 qui permet une désolidarisation de l'arbre d'entraînement 14 d'avec l'élément de structure de caisse 20 lorsque le dispositif d'essuyage 10 est soumis à un impact violent. Ici, comme on peut le voir à la figure 2, ces moyens de fixation consistent en un élément annulaire 24 de la semelle 22 qui est coaxial au fût 18 et de section en U.

Une première aile verticale 26, radialement externe, de élément annulaire 24 est fixée à la semelle 22, et la deuxième aile verticale 28, radialement interne, de élément annulaire 24 est reçue dans une gorge complémentaire 30 de la paroi cylindrique externe 18e du fût 18.

Pour la désolidarisation de l'arbre d'entraînement 14 d'avec l'élément de structure de caisse, l'élément annulaire 24 est apte à sortir de la gorge complémentaire 30 du fût 18 en se déformant élastiquement ou bien par rupture.

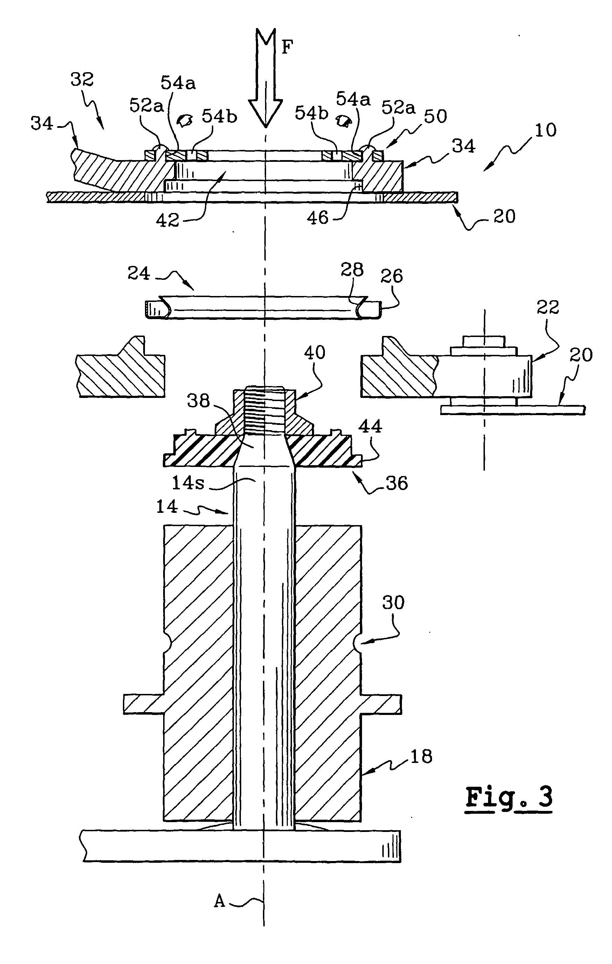

Comme on l'a représenté à la figure 3, lorsque le mécanisme d'essuyage 10 est soumis à un impact violent, l'arbre d'entraînement 14 et le fût 18 sont soumis à un effort "F" globalement orienté vers le bas, ce qui entraîne l'échappement de la deuxième aile verticale 28 de l'élément annulaire 24 hors de la gorge complémentaire 30.

Le fût 18 n'est alors plus retenu verticalement par l'élément annulaire 24, et il peut alors coulisser vers la bas par rapport à la semelle 22.

Le bras d'essuie-glace 16 est relié à l'arbre d'entraînement 14 par l'intermédiaire d'une tête d'entraînement 32 qui s'étend globalement longitudinalement vers l'avant depuis une portion supérieure 14s de l'arbre d'entraînement 14, et qui comporte des moyens permettant une désolidarisation du bras d'essuie-glace 16 d'avec l'arbre d'entraînement 14 lors de l'impact violent.

A cet effet, la tête d'entraînement 32 comporte un élément avant 34, à l'extrémité longitudinale avant libre 34a duquel le bras d'essuie-glace 16 est monté articulé autour d'un axe transversal B, et un élément arrière 36 qui est fixé à la portion supérieure 14s de l'arbre entraînement 14 par l'intermédiaire d'une surface de portée conique crantée 38 et d'un écrou de serrage 40.

Pour permettre la désolidarisation du bras d'essuie-glace 16 d'avec l'arbre d'entraînement 14, l'élément avant 34 et l'élément arrière 36 sont reliés par des moyens permettant leur désolidarisation lors de l'impact violent.

L'élément arrière 36 consiste en une douille qui est coaxiale à l'arbre d'entraînement 14 et qui est reçue dans un logement complémentaire 42 de l'élément avant 34 de manière à permettre la transmission des efforts d'entraînement du bras d'essuie-glace 16.

Ainsi, selon une variante de réalisation de l'invention (non représentée), les sections horizontales de l'élément arrière 36 et du logement complémentaire 42 sont non circulaires. Elles sont par exemple carrées, polygonales, ou bien crantées. Il sera compris que l'invention n'est pas limitée à ce mode de réalisation, et les moyens de transmission des efforts d'entraînement peuvent avoir une autre structure, comme par exemple une clavette qui est reçue dans une gorge verticale de section complémentaire.

De plus, pour permettre un appui de l'élément avant 34 sur l'élément arrière 36, sans que cela ne provoque une désolidarisation des deux éléments 34, 36 du fait du poids du bras d'essuie-glace 16, l'élément arrière 36 comporte un épaulement 44 qui s'étend radialement vers l'extérieur depuis son bord inférieur 36i et qui est reçu dans une gorge complémentaire 46 du logement 42.

Conformément à l'invention, les moyens de liaison de l'élément avant 34 avec l'élément arrière 36 comportent une pièce intermédiaire 50 qui est reliée à l'élément avant 34 et à l'élément arrière 36, de manière à réaliser un verrouillage en mouvement vertical des deux éléments l'un par rapport à l'autre, et qui est apte à se désolidariser de l'élément avant 34 ou de l'élément arrière 36 lors de l'impact violent.

Ici, la pièce intermédiaire 50 est fixée sur les faces supérieures 34s, 36s de l'élément avant 34 et de l'élément arrière 36, par l'intermédiaire de plusieurs doigts 52a, 52b de l'élément avant 34 et de l'élément arrière 36, respectivement, qui s'étendent verticalement vers le haut depuis la face supérieure 34s, 36s de l'élément 34, 36 associé, et dont chacun est reçu dans un orifice complémentaire 54a, 54b associé de la pièce intermédiaire 50.

Le verrouillage vertical de la pièce intermédiaire 50 en position montée sur l'élément avant 34 et l'élément arrière 36 est réalisé par les extrémités supérieures libres des doigts 52a, 52b qui sont de diamètre supérieur au diamètre du logement associé, et qui s'appuient sur la face supérieure 50s de la pièce intermédiaire 50, à la manière d'un rivetage.

Les doigts 52a, 52b d'un même élément avant ou arrière 34, 36 sont préférentiellement agencés à une même cote radiale par rapport à l'axe A d'articulation de l'arbre d'entraînement 14, c'est-à-dire qu'ils sont répartis sur un même cercle. De plus, les doigts 52a, 52b sont répartis angulairement sur le cercle associé de manière qu'un doigt 52a de l'élément avant 34 et un doigt 52b de l'élément arrière 36 soient alignés avec l'axe A vertical d'articulation.

Selon un premier aspect de l'invention, la pièce intermédiaire 50 est une pièce annulaire coaxiale à l'élément arrière 36, et elle est de section rectangulaire.

Les orifices 54a, 54b de la pièce intermédiaire 50 sont agencés de manière que chacun soit associé à un doigt 52a, 52b de l'élément avant 34 ou de l'élément arrière 36.

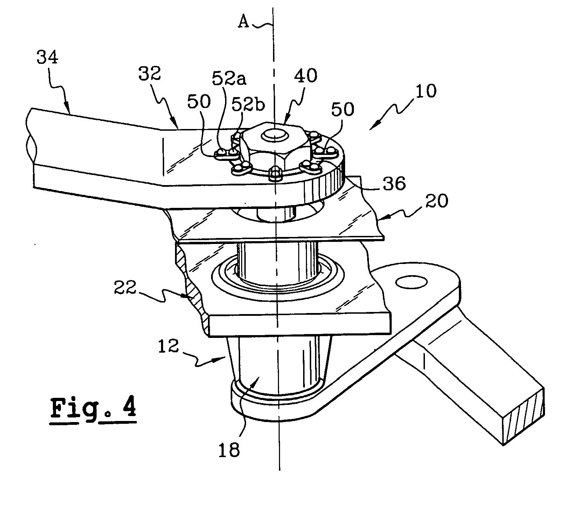

Selon un deuxième aspect de l'invention, représenté à la figure 4, la pièce intermédiaire 50 comporte plusieurs éléments radiaux, ici au nombre de huit, qui sont répartis angulairement autour de l'axe A d'articulation de manière homogène, et chacun de ces éléments radiaux comporte deux orifices 54a, 54b, associés à un doigt 52a de l'élément avant 34 et à un doigt 52b de l'élément arrière 36, respectivement.

Conformément à un premier mode de réalisation de l'invention, pour se désolidariser de l'élément avant 34 ou de l'élément arrière 36, la pièce intermédiaire 50 comporte une zone d'amorce de rupture qui est agencée radialement entre les deux cercles concentriques sur lesquels sont situés les logements 54a, 54b de manière que lors de l'impact, la pièce intermédiaire 50 se sépare en deux parties, l'une restant fixée à l'élément avant 34, l'autre restant fixée à l'élément arrière 36.

Selon une variante de réalisation de l'invention, la pièce intermédiaire 50 est apte à se déformer plastiquement, ou élastiquement, de manière que l'impact provoque la déformation de la pièce intermédiaire 50 pour que les doigts 52a de l'élément avant 34 ou les doigts 52b de l'élément arrière 36 puissent sortir des l'orifices 54a, 54b de la pièce intermédiaire 50 associés.

Selon un autre variante de réalisation de l'invention, représentée à la figure 3, ce sont les doigts 52a, 52b de l'élément avant 34 ou de l'élément arrière 36 qui sont aptes à se déformer plastiquement, ou élastiquement, ou bien qui sont aptes à rompre lors de l'impact pour obtenir une désolidarisation de la pièce intermédiaire 50 d'avec l'élément avant 34 ou l'élément arrière 36.

Lorsque l'élément avant 34 et l'élément arrière 36 sont désolidarisés, et lorsque le fût 18 est désolidarisé de la semelle 22, l'ensemble constitué du fût 18 et de l'arbre entraînement 14 peut alors librement s'effacer dans l'élément de structure de caisse par un mouvement globalement vertical vers le bas. Par ailleurs, pour que le fût 18 et l'arbre d'entraînement 14 puisse s'effacer au maximum, les dimensions de l'élément arrière 36 sont déterminés de manière à permettre son passage au travers de la semelle 22.

Dans l'agencement qui vient d'être décrit, l'élément avant 34 et l'élément arrière 36 de la tête d'entraînement 32 se désolidarisent en même temps que le fût 18 se désolidarise de la semelle 22. Cependant, il sera compris que les deux désolidarisation peuvent avoir lieu consécutivement en fonction du point d'application de l'impact sur le dispositif d'essuyage 10.

## Revendications

1. Agencement pour la fixation d'un dispositif d'essuyage (10) pour véhicule automobile, du type comportant :
- un fût (18) de guidage en rotation et de fixation d'un arbre (14) d'entraînement en balayage alterné d'un bras d'essuyage (16), qui s'étend axialement suivant une direction sensiblement verticale, et qui est fixé sur un élément de structure de caisse (20) du véhicule par des moyens (24, 30) qui permettent sa désolidarisation au moins partielle d'avec l'élément de structure de caisse (20) lorsque le dispositif d'essuyage (10) est soumis à un impact ;
- et une tête (32) d'entraînement qui relie le bras d'essuyage (16) à l'arbre d'entraînement, (14) **caractérisée en ce qu'**elle comporte un élément avant (34) portant le bras d'essuyage (16), et un élément arrière (36) qui consiste en une douille coaxiale à l'arbre d'entraînement (14) et qui est reçu au moins en partie dans un logement complémentaire (42) de l'élément avant (34), l'élément avant (34) et l'élément arrière (36) étant reliés entre eux par des moyens (50) permettant une désolidarisation du bras d'essuyage (16) d'avec l'arbre d'entraînement (14) lors de la désolidarisation du fût (18) d'avec l'élément de structure de caisse (20),
les moyens de liaison de l'élément avant avec l'élément arrière comportant au moins une pièce intermédiaire (50) qui est apte à se désolidariser de l'élément avant (34), ou de l'élément arrière (36), lors de la désolidarisation du fût (18) d'avec l'élément de structure de caisse (20).

2. Agencement selon la revendication 1, **caractérisé en ce que** la pièce intermédiaire (50) comporte une zone d'amorce de rupture.

3. Agencement selon la revendication 1, **caractérisé en ce que** la pièce intermédiaire (50) est apte à se déformer élastiquement ou plastiquement lors de la désolidarisation du fût (18) d'avec l'élément de structure de caisse (20).

4. Agencement selon l'une des revendications 2 ou 3, **caractérisé en ce que** l'élément avant (34) et/ou l'élément arrière (36) comporte au moins un doigt (52a, 52b) qui est reçu dans un orifice complémentaire (54a, 54b) de la pièce intermédiaire (50), et **en ce que** la désolidarisation du fût (18) d'avec l'élément de structure de caisse (20) provoque la sortie du doigt (52a, 52b) hors de l'orifice (54a, 54b).

5. Agencement selon la revendication 1, **caractérisé en ce que** l'élément avant (34) et/ou l'élément arrière (36) comporte au moins un doigt (52a, 52b) qui est reçu dans un orifice (54a, 54b) complémentaire de la pièce intermédiaire (50) qui est apte à se déformer plastiquement ou élastiquement pour sortir hors de l'orifice (54a, 54b) de la pièce intermédiaire (50) lors de la désolidarisation du fût (18) d'avec l'élément de structure de caisse (20).

6. Agencement selon la revendication 1, **caractérisé en ce que** l'élément avant (34) et/ou l'élément arrière (36) comporte au moins un doigt (52a, 52b) qui est reçu dans un orifice (54a, 54b) complémentaire de la pièce intermédiaire (50) qui est apte à se rompre lors de la désolidarisation du fût (18) d'avec l'élément de structure de caisse (20).

7. Agencement selon l'une quelconque des revendications précédentes, **caractérisé en ce que** le fût (18) est un composant d'un palier (12) de guidage qui comporte une semelle annulaire (22) et coaxiale au fût (18), de fixation sur un élément de structure de caisse (20), et **en ce que** le fût (18) est relié à la semelle (22) par l'intermédiaire d'au moins un élément (24) de la semelle (22) qui est reçu dans une gorge complémentaire (30) de la paroi cylindrique externe (18e) du fût (18) et qui est apte à échapper hors de la gorge (30) par déformation élastique ou par rupture, lors de la désolidarisation du fût (18) d'avec l'élément de structure de caisse (20).

## Claims

1. An arrangement for fixing a wiping device (10) for a motor vehicle, comprising:
- a stem (18) for guiding in rotation and for fixing a shaft (14) for driving, into an alternate sweeping, a wiping arm (16) which axially extends along a substantially vertical direction, and which is fixed on a body structure element (20) of the vehicle by means (24, 30) which allow an at least partial uncoupling from the body structure element (20) when the wiping device (10) is submitted to a shock;
- and a driving head (32) which connects the wiping arm (16) to the driving shaft (14), **characterised in that** the driving head (32) comprises a front element (34) supporting the wiping arm (16), and a rear element (36) which consists of a socket coaxial with the driving shaft (14) and which is received at least partially in a complementary cavity (42) of the front element (34), the front element (34) and the rear element (36) being connected to each other by means (50) allowing the uncoupling of the wiping arm (16) from the driving shaft (14) upon the uncoupling of the stem (18) from the body structure element (20),
- the means connecting the front element with the rear element comprising at least an intermediate part (50) which is capable of uncoupling from the front element (34), or from the rear element (36), upon the uncoupling of the stem (18) from the body structure element (20).

2. An arrangement according to claim 1, **characterised in that** the intermediate part (50) comprises an incipient break zone.

3. An arrangement according to claim 1, **characterised in that** the intermediate part (50) is capable of deforming in terms of elasticity or in terms of form upon the uncoupling of the stem (18) from the body structure element (20).

4. An arrangement according to one of claims 2 or 3, **characterised in that** the front element (34) and/or the rear element (36) comprises at least one finger (52a,52b), which is received in a complementary hole (54a,54b) of the intermediate part (50), and **in that** the uncoupling on the stem (18) from the body structure element (20) causes the finger (52a), (52b) to come out of the hole (54a,54b).

5. An arrangement according to claim 1, **characterised in that** the front element (34) and/or the rear element (36) comprises at least one finger (52a,52b) which is received in a complementary hole (54a,54b) of the intermediate part(50), which is capable of deforming in terms of form or in terms of elasticity to come out of the hole (54a,54b) of the intermediate part (50) upon uncoupling of the stem (18) from the body structure element (20).

6. An arrangement according to claim 1, **characterised in that** the front element (34) and/or the rear element (36) comprises at least one finger (52a,52b) which is received in a complementary hole (54a,54b) of the intermediate part (50), which is capable of breaking upon the uncoupling of the stem (18) from the body structure element (20).

7. An arrangement according to any one of the preceding claims, **characterised in that** the stem (18) is a component of a guiding bearing (12) which comprises an annular base plate (22) coaxial to the stem (18), for fixing thereof on a body structure element (20) and **in that** the stem (18) is connected to the base plate (22) by at least one element (24) of the base plate (22) which is received in a complementary groove (30) of the outer cylindrical wall (18e) of the stem (18) and which is capable of coming out of the groove (30) because of an elastic deformation or a breaking, upon the uncoupling of the stem (18) from the body structure element (20).

## Patentansprüche

1. Anordnung für die Befestigung einer Wischvorrichtung (10) für ein Kraftfahrzeug von der Art mit folgenden Teilen:
- Ein Schaft (18) für die Führung in Drehung und Befestigung einer Antriebswelle (14) in abwechselndes Wischen eines Wischarms (16), der sich axial in einer deutlich senkrechten Richtung erstreckt, und der auf einem Strukturelement der Karosserie (20) des Fahrzeugs mit Mitteln (24, 30) befestigt ist, die seine zumindest teilweise Trennung vom Strukturelement der Karosserie (20) ermöglichen, wenn die Wischvorrichtung (10) einem Stoß ausgesetzt ist;
- Und ein Antriebskopf (32), der den Wischarm (16) mit der Antriebswelle (14) verbindet, **dadurch gekennzeichnet, daß** er ein vorderes Element (34) umfaßt, das den Wischarm (16) trägt, und ein hinteres Element (36), das aus einer zur Antriebswelle (14) koaxialen Hülse besteht, und die zumindest teilweise in einer ergänzenden Aufnahme (42) des vorderen Elements (34) aufgenommen wird, wobei das vordere Element (34) und das hintere Element (36) durch Mittel (50) miteinander verbunden sind, die bei der Trennung des Schafts (18) vom Element der Karosseriestruktur (20) eine Trennung des Wischarms (16) von der Antriebswelle (14) zulassen;
Die Verbindungsmittel des vorderen Elements mit dem hinteren Element, die mindestens ein Zwischenteil (50) umfassen, das geeignet ist, sich bei der Trennung des Schafts (18) vom Element der Karosseriestruktur (20) vom vorderen Element (34) oder dem hinteren Element (36) zu trennen.

2. Gestaltung nach Anspruch 1, **dadurch gekennzeichnet, daß** das Zwischenteil (50) eine Anrißzone des Bruchs umfaßt.

3. Gestaltung nach Anspruch 1, **dadurch gekennzeichnet, daß** das Zwischenteil (50) fähig ist, sich bei Lösung des Schafts (18) vom Element der Karosseriestruktur (20) elastisch oder plastisch zu verformen.

4. Gestaltung nach einem der vorstehenden Ansprüche 2 oder 3, **dadurch gekennzeichnet, daß** das vordere Element (34) und/oder das hintere Element (36) mindestens einen Zapfen (52a, 52b) umfaßt, der in einer ergänzenden Öffnung (54a, 54b) des Zwischenelements (50) aufgenommen wird, und daß die Trennung des Schafts (18) vom Element der Karosseriestruktur (20) den Austritt des Zapfens (52a, 52b) aus der Öffnung (54a, 54b) auslöst.

5. Gestaltung nach Anspruch 1, **dadurch gekennzeichnet, daß** das vordere Element (34) und/oder das hintere Element (36) mindestens einen Zapfen (52a, 52b) umfaßt, der in einer ergänzenden Öffnung (54a, 54b) des Zwischenelements (50) aufgenommen wird, die sich plastisch oder elastisch verformen kann, um bei der Trennung des Schafts (18) vom Element der Karosseriestruktur (20) aus der Öffnung (54a, 54b) des Zwischenteils (50) austreten zu können.

6. Gestaltung nach Anspruch 1, **dadurch gekennzeichnet, daß** das vordere Element (34) und/oder das hintere Element (36) mindestens einen Zapfen (52a, 52b) umfaßt, der in einer ergänzenden Öffnung (54a, 54b) des Zwischenelements (50) aufgenommen wird, der bei der Trennung des Schafts (18) vom Element der Karosseriestruktur (20) zu brechen.

7. Gestaltung nach einem beliebigen der vorstehenden Ansprüche, **dadurch gekennzeichnet, daß** der Schaft (18) eine Komponente eines Führungslagers (12) ist, das eine ringförmige (22) und eine koaxiale Sohle des Schafts (18) für die Befestigung auf einem Element der Karosseriestruktur (20) umfaßt, und daß der Schaft (18) vermittels von mindestens einem Element (24) der Sohle (22) verbunden ist, das in einer ergänzenden Kehle (30) der zylinderförmigen äußeren Wand (18e) des Schafts (18) aufgenommen wird, und das fähig ist, durch elastische Verformung oder durch Bruch bei Trennung des Schafts (18) vom Element der Karosseriestruktur (20) aus der Kehle (30) auszutreten.
